Europäisches Patentamt

European Patent Office

Office européen des brevets

(19)

(11) Veröffentlichungsnummer: **0 142 837**

A2

(12) # EUROPÄISCHE PATENTANMELDUNG

(21) Anmeldenummer: **84113901.7**

(22) Anmeldetag: **16.11.84**

(51) Int. Cl.⁴: **H 02 P 6/02**
**H 02 K 29/06**

(30) Priorität: **18.11.83 DE 3341731**

(43) Veröffentlichungstag der Anmeldung:
**29.05.85 Patentblatt 85/22**

(84) Benannte Vertragsstaaten:
**AT BE CH DE FR GB IT LI LU NL SE**

(71) Anmelder: **PAPST-MOTOREN GmbH & Co. KG**
**Karl-Maier-Strasse 1 Postfach 35**
**D-7742 St. Georgen/Schwarzwald 1(DE)**

(72) Erfinder: **Von der Heide, Johann, Dipl.-Ing.**
**Markstrasse 15**
**D-7230 Schramberg(DE)**

(74) Vertreter: **Schwan, Gerhard, Dipl.-Ing.**
**Elfenstrasse 32**
**D-8000 München 83(DE)**

(54) Kollektorloser Mehrphasen-Gleichstrommotor.

(57) Kollektorloser Mehrphasen-Gleichstrommotor mit einer Motorstellungs-Geberanordnung, einer in Abhängigkeit von der Geberanordnung arbeitenden Kommutierungssteuereinrichtung und einer von der Kommutierungssteuereinrichtung angesteuerten Endstufe zum zyklischen Beaufschlagen der Motorwicklungen mit Strom. Die Motorstellungs-Geberanordnung weist nur einen einzigen Stellungsgeber auf. Als Kommutierungssteuereinrichtung ist ein die Kommutierungsbefehle für alle Motorphasen liefernder Mikroprozessor mit internerner Möglichkeit zur Zeitmessung und Zeitvorgabe zwecks Erfassung der Periode des vom Stellungsdetektor angelieferten Signals und Ausgabe von vorbestimmten Zeiten vorgesehen.

Fig. 1

EP 0 142 837 A2

DE-312

*Papst-Motoren*
*GmbH & Co. KG*
*Karl-Maier-Str. 1*
*7742 St. Georgen/Schwarzwald*

*Kollektorloser*
*Mehrphasen-Gleichstrommotor*

*Die Erfindung betrifft einen kollektorlosen Mehrphasen-Gleichstrommotor mit einer Motorstellungs-Geberanordnung, einer in Abhängigkeit von der Geberanordnung arbeitenden Kommutierungssteuereinrichtung und einer von der Kommutierungssteuereinrichtung angesteuerten Endstufe zum zyklischen Beaufschlagen der Motorwicklungen mit Strom.*

*Bekannte Motoren dieser Art (z.B. DE-OS 20 47 307) weisen eine der Phasenzahl entsprechende Anzahl von Stellungsgebern (Winkelsensoren) auf. Das heißt, ein zweiphasiger Motor benötigt zwei Stellungsgeber, für einen dreiphasigen Motor sind drei Stellungsgeber erforderlich, usw., um die Stromzufuhr zu den einzelnen Motorwicklungen in Abhängigkeit von der Rotorstel-lung des Motors zum jeweils richtigen Zeitpunkt ein- und auszuschalten. Einer der mit einer solchen Auslegung verbundenen Nachteile besteht darin, daß zu dem Motor eine relativ große Anzahl von Leitungen führen muß, da jeder Stellungsgeber min-destens zwei Zuleitungen benötigt.*

- 2 -

Der Erfindung liegt die Aufgabe zugrunde, einen kollektorlosen Mehrphasen-Gleichstrommotor zu schaffen, der mit einer
besonders kleinen Anzahl von Zuleitungen auskommt.

Diese Aufgabe wird erfindungsgemäß dadurch gelöst, daß die Motorstellungs-Geberanordnung nur einen einzigen Stellungsgeber
aufweist und als Kommutierungssteuereinrichtung ein die Kommutierungsbefehle für alle Motorphasen liefernder Mikroprozessor
mit interner Möglichkeit zur Zeitmessung und Zeitvorgabe zwecks
Erfassung der Periode des vom Stellungsdetektor angelieferten
Signals und Ausgabe von vorbestimmten Zeiten vorgesehen ist.

Unabhängig von der Phasenzahl des Motors ist also nur ein
einziger Stellungsgeber vorhanden, der einmal pro Umdrehung
des Rotors des Motors ein Signal abgibt. Bei diesem Signal
kann es sich um einen Impuls mit grundsätzlich beliebigem
Tastverhältnis und beliebiger Polarität handeln. Anhand des
Ausgangssignals des einzigen Stellungsgebers bestimmt dann
der Mikroprozessor das notwendige Ansteuermuster für die
verschiedenen Wicklungen des Mehrphasenmotors. Im Falle
eines Dreiphasenmotors sind bei der erfindungsgemäßen Lösung drei Wicklungszuleitungen und bei Verwendung eines
passiven Sensors zwei Geberleitungen sowie bei Benutzung
eines aktiven Sensors drei Geberzuleitungen, insgesamt
also 5 bzw. 6 Leitungen notwendig.

Weitere Ausgestaltungen der Erfindung ergeben sich aus den
Unteransprüchen.

Die Erfindung ist im folgenden anhand von bevorzugten Ausführungsbeispielen näher erläutert. In den beiliegenden Zeichnungen zeigen:

Fig. 1           ein Blockschaltbild für einen kollektorlosen Mehrphasen-Gleichstrommotor nach der Erfindung, und

Fig. 2           bei dem Motor nach Fig. 1 auftretende Signale bzw. Wicklungsströme.

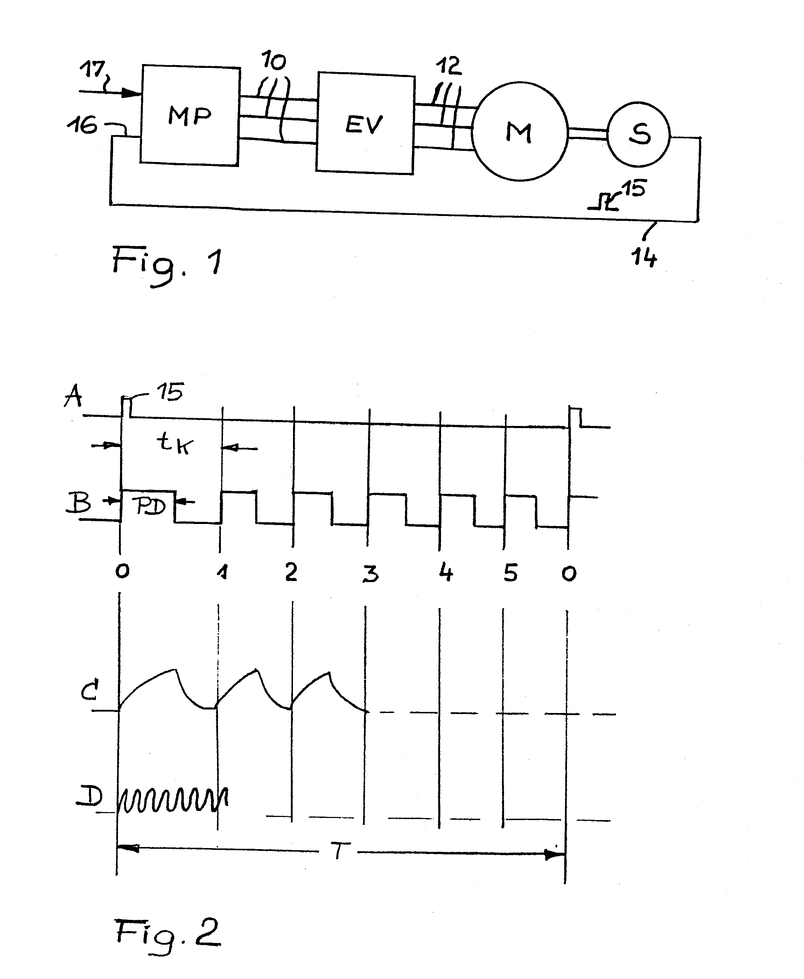

Entsprechend Fig.1 ist als Kommutierungssteuereinrichtung oder Steuerblock ein Mikroprozessor MP vorgesehen, der über Steuerleitungen 10 mit einer Endverstärkerstufe EV gekoppelt ist. Die Endverstärkerstufe EV bestromt über drei Zuleitungen 12 einen kollektorlosen Mehrphasen-Gleichstrommotor M, bei dem es sich im vorliegenden Ausführungsbeispiel um einen Dreiphasenmotor handelt. Der eigentliche Motor M stellt einen reinen Synchronmotor dar. Der Motor M ist mit einem Stellungsgeber oder Winkelsensor S mechanisch gekoppelt. Der Stellungsgeber S gibt über eine Steuerleitung 14 für jede Motorumdrehung einen Steuerimpuls 15 an einen Eingang 16 des Mikroprozessors MP. Der Mikroprozessor verfügt über eine interne Möglichkeit zur Zeitmessung und Zeitvorgabe. Er erlaubt es daher, die Periode der am Eingang 16 einlaufenden Steuerimpulse 15 zu erfassen und vorbestimmte Zeiten zur Erzeugung des elektrischen Ansteuermusters auszugeban, anhand dessen über die Endverstärkerstufe EV die Motorwicklungen des Motors M bestromt werden. Der Mikroprozessor MP ist ferner, wie bei 17 angedeutet, mit

- 4 -

Befehls- und Steuereingängen ausgestattet, über die beispielsweise die Solldrehzahl eingestellt werden kann.

Das Hochlaufen des Motors M auf die Solldrehzahl beginnt
mit einer Nullpositionssuche. Für letztere wird unter dem
Einfluß des Mikroprozessors MP über die Endverstärkerstufe
EV willkürlich eine bestimmte Phase des Motors bestromt.
Steht der Motor M nicht zufällig genau in einer solchen
Position, daß er kein Drehmoment entwickeln kann, pendelt
er sich in die Startposition ein. Um dieses Einpendeln mit
Sicherheit zuzulassen, gibt der Mikroprozessor MP eine
zweckentsprechende Zeitschleife vor. Nach Ablauf der durch
diese Zeitschleife bestimmten Zeitdauer wird eine zweite
Motorphase mit Strom beaufschlagt. Hatte der Motor beim Bestromen der ersten Phase in einem instabilen Punkt gestanden, pendelt er sich jetzt mit Sicherheit in die benötigte
Startposition ein. Eine erneute Zeitschleife stellt ausreichende Einpendelzeit zur Verfügung. Nachdem diese Zeit
abgewartet ist, wird ausgehend von der zweiten bestromten
Phase die in der beabsichtigten Drehrichtung nächste Phase
durch einen Befehl des Mikroprozessors MP über die Endverstärkerstufe EV mit Strom beaufschlagt. Der Motor M
läuft jetzt nach Art eines Schrittmotors los.

Für eine erste Beschleunigungsdauer wird von einem Speicher
des Mikroprozessors MP eine feste Taktverkürzungsfolge vorgegeben. Dies bewirkt, daß die Zeitspanne vom Umschalten
von einer zur nächsten Phase fortlaufend kürzer gemacht wird,
so daß die Kommutierung stetig schneller wird. Diese fest
vorprogrammierte Taktverkürzung wird durchgeführt, bis ein
vorbestimmter niedriger Drehzahlwert, beispielsweise 50 Umdrehungen pro Minute, erreicht ist oder beispielsweise zwei aufeinanderfolgende Pulse des Stellungsgebers S vom Mikroprozessor erkannt werden. Das Festprogramm für die Taktverkürzung wird für den betreffenden Motortyp im voraus experimentell bestimmt. Dabei wird festgestellt, in welchem Rhythmus der Motor nach Art eines Schrittmotors beschleunigt werden kann, ohne allzu stark zu schwingen und dadurch außer Tritt zu fallen. Zur Sicherheit wird zweckmäßig vom Mikroprozessor jeweils die Periode der Stellungsgebersignale 15 gemessen, und der Mikroprozessor stellt fest, ob die gemessene Periode größer als ein vorbestimmter Grenzwert ist. Die Erfüllung dieser Bedingung gewährleistet, daß der Motor sicher hochläuft.

Nach Erreichen der genannten niedrigen Grenzdrehzahl von beispielsweise 50 Umdrehungen pro Minute oder Erkennen von zwei aufeinanderfolgenden Pulsen schaltet der Mikroprozessor MP auf einen Beschleunigungsbetrieb um, bei dem die Umdrehungszeit des Motors, d.h. die Periode der Steuerimpulse 15, gemessen und für die je Umdrehung vorgesehene Pulszahl für die betreffenden nächsten Motorphasen ein Zeittakt gesetzt wird, der um einen vorbestimmten Wert kleiner als der Quotient aus der gemessenen Stellungsgebersignalperiode für die jeweils vorangegangene Motorumdrehung und der Pulszahl je Umdrehung ist. Bei einem vierpoligen Dreiphasenmotor treten beispielsweise 12 Pulse pro Umdrehung auf. Die Beschleunigung erfolgt also jetzt in einem geregelten Betrieb in Abhängigkeit von der gemessenen Istdrehzahl des Motors, wobei die Phasenfolge mit einer Zeit gesetzt wird, die aus der jeweils alten Umdrehungsgeschwindigkeit berechnet ist. Dieser beschleunigungsgeregelte Betrieb erlaubt es, den Motor ohne die Gefahr eines Außertrittfallens wesentlich rascher zu beschleunigen, als dies bei einem mit

- 6 -

*Festprogramm arbeitendem Schrittmotor der Fall ist.*

*Zur weiteren Sicherung gegenüber einem Außertrittfallen beim Beschleunigen kann vom Mikroprozessor MP vorteilhaft ein Test ausgeführt werden, im Verlaufe dessen eine logische Entscheidungsstufe nach jeder Motorumdrehung ermittelt, ob der Motor während der vorangegangenen Umdrehung beschleunigt hat, d.h. die Periode der Steuerimpulse 15 kürzer geworden ist. Eine weitere Taktverkürzung der Kommutierungssignale wird von dieser Entscheidungsstufe dann nur für den Fall zugelassen, daß tatsächlich eine Beschleunigung ermittelt wurde.*

*Nachdem der Mikroprozessor MP durch einen Vergleich der Stellungsgeber-Signalperiode mit der der Solldrehzahl entsprechenden Umdrehungsdauer ermittelt hat, daß bis auf die Solldrehzahl beschleunigt ist, kann auf einen drehzahlgeregelten Betrieb übergegangen werden. Dabei wird mittels des Mikroprozessors MP anhand der Periode des Stellungsgebersignals 15 die Zeit pro Umdrehung gemessen und mit einer der Solldrehzahl entsprechenden Zeitspanne verglichen. Anhand eines vorbestimmten Regelalgorithmus, beispielsweise eines PID-Algorithmus, kann dann vom Mikroprozessor MP die Dauer der der Endverstärkerstufe EV zugehenden Steuerimpulse als Funktion der ermittelten Drehzahlabweichung eingestellt werden.*

*Ein solcher Drehzahlregelbetrieb ist in Fign. 2A, B und C angedeutet. Fig. 2A veranschaulicht dabei das Stellungsgebersignal 15, das sich einmal pro Umdrehung wie-*

derholt. Es ist ein 6-pulsiger Motor angenommen, so
daß die der Zeit einer Umdrehung entsprechende Periode T des Stellungsgebersignals 15 vom Mikroprozessor
MP durch sechs geteilt werden muß, um die Kommutierungszeit $t_k$ zu erhalten, nach der jeweils eine
Kommutierung der Wicklungen des Dreiphasenmotors erfolgen muß. In Abhängigkeit von der ermittelten Drehzahlabweichung erfolgt nun aber die Bestromung der Motorwicklungen im drehzahlgeregelten Betrieb nicht jeweils während der vollen Kommutierungszeit, sondern
nur während einer mit PD bezeichneten Pulsdauer, die
innerhalb eines Kommutierungszeitraumes anfängt
und zu einem Zeitpunkt endet, der eine Funktion der
Drehzahlabweichung ist (Fig. 2B). Wirkt auf den Motor
ein bremsendes Lastdrehmoment ein, vergrößert der Mikroprozessor MP die Pulsdauer PD. Nimmt die Last ab, wird
PD verkürzt. Die Steuerimpulse gemäß Fig. 2B gehen über
die Steuerleitungen 10 an die Endverstärkerstufe EV. In
den Wicklungen des Motors stellen sich aufgrunddessen
Ströme der in Fig. 2C veranschaulichten Art ein.

Eine abgewandelte Art des drehzahlgeregelten Betriebs
ist in Fig. 2D veranschaulicht. Dort gehen den einzelnen Motorwicklungen während jeweils der vollen Kommutierungszeit $t_k$ Steuerimpulse zu, und es wird das
Tastverhältnis dieser Steuerimpulse von Umdrehung zu
Umdrehung in Abhängigkeit von der ermittelten Drehzahlabweichung eingestellt. Die Steuerpulse gemäß
Fig. 2D kommen von einem Steuerpulsgenerator, der diese Impulse mit einer im Vergleich zur Kommutierungsfrequenz $1/t_k$ hohen Folgefrequenz abgibt. Dieser Steuerpulsgenerator kann gleichfalls von dem Mikroprozessor MP gebildet sein. Der Drehzahlregelbetrieb gemäß
Fig. 2D führt zu einer gleichmäßigeren Stromverteilung
in den Motorwicklungen während Kommutierungszeiten $t_k$.

Die Endverstärkerstufe EV kann insbesondere bei Motoren
relativ kleiner Leistung im einfachsten Fall von Darlington-Transistorstufen gebildet sein, die unmittelbar vom
Mikroprozessor MP angesteuert werden. Dabei läßt sich
der Motorstrom über den Motorwicklungswiderstand begrenzen.

Im Falle von Motoren mit höherer Leistung ist die Endverstärkerstufe zweckmäßig mit einer Überwachungsanordnung zum Begrenzen des Motorstroms versehen. Diese Überwachungsanordnung signalisiert dem Mikroprozessor, wann
der Motorstrom einen vorgegebenen Grenzwert überschreitet.
Der Mikroprozessor schaltet dann die Stromzufuhr ab und
bewirkt eine erneute Stromeinschaltung erst nach einer gewissen Wartedauer. Die Strombegrenzung wird in der Regel
nur während des Beschleunigens notwendig sein, während im
drehzahlgeregelten Betrieb übermäßige Motorströme nicht
zu erwarten sind.

Stellungsgeber, die während jeder Umdrehung einen Impuls
abgeben, sind bei verschiedenen praktischen Motoranwendungen ohnehin vorhanden, beispielsweise bei Antrieben für magnetische Festplattenspeicher. Antriebe der letztgenannten
Art verfügen in der Regel auch über einen Mikroprozessor.
Für den vorliegend erläuterten Motor können daher in solchen

0142837

- 9 -

*Fällen die sowieso aus anderen Gründen vorhandenen Baugruppen S und NP mitgenutzt werden. Zum Betrieb des Motors ist dann zusätzlich nur ein Endstufen-IC erforderlich.*

PATENTANWALT DIPL.-ING. GERHARD SCHWAN

ELFENSTRASSE 32 · D-8000 MÜNCHEN 83

**0142837**

DE-312

Papst-Motoren
GmbH & Co. KG
Karl-Maier-Str. 1
7742 St. Georgen/Schwarzwald


A n s p r ü c h e


1. Kollektorloser Mehrphasen-Gleichstrommotor mit einer
Motorstellungs-Geberanordnung, einer in Abhängigkeit
von der Geberanordnung arbeitenden Kommutierungssteuereinrichtung und einer von der Kommutierungssteuereinrichtung angesteuerten Endstufe zum zyklischen Beaufschlagen der Motorwicklungen mit Strom, dadurch gekennzeichnet, daß die Motorstellungs-Geberanordnung nur
einen einzigen Stellungsgeber (S) aufweist und als Kommutierungssteuereinrichtung ein die Kommutierungsbefehle für alle Motorphasen liefernder Mikroprozessor (MP)
mit interner Möglichkeit zur Zeitmessung und Zeitvorgabe zwecks Erfassung der Periode des vom Stellungsdetektor angelieferten Signals und Ausgabe von vorbestimmten Zeiten vorgesehen ist.


2. Mehrphasen-Gleichstrommotor nach Anspruch 1, dadurch
gekennzeichnet, daß über den Mikroprozessor (MP) die Motorwicklungen entsprechend der vorgesehenen Drehrichtung in
allmählich rascher werdendem Takt zum Beschleunigen des
Motors nach Art eines Schrittmotors einschaltbar sind.

FERNSPRECHER: 089/6012039 · TELEX: 522589 elpa d · KABEL: ELECTRICPATENT MÜNCHEN

3. Mehrphasen-Gleichstrommotor nach Anspruch 1 oder 2, dadurch gekennzeichnet, daß zur Startpositionssuche über den Mikroprozessor (MP) eine willkürlich vorbestimmte erste Phase des Motors für eine vorgegebene Zeitspanne und dann anschließend eine zweite Phase des Motors gleichfalls für eine vorgegebene Zeitspanne bestrombar sind.

4. Mehrphasen-Gleichstrommotor nach einem der vorhergehenden Ansprüche, dadurch gekennzeichnet, daß ausgehend von der Startposition des Motors zum Übergang in die Schrittmotor-Beschleunigungsphase die in der gewünschten Drehrichtung nächste Phase des Motors bestrombar ist.

5. Mehrphasen-Gleichstrommotor nach einem der vorhergehenden Ansprüche, gekennzeichnet durch einen Speicher zur Vorgabe einer motorabhängigen festen Taktverkürzungsfolge für die Schrittmotor-Beschleunigungsphase.

6. Mehrphasen-Gleichstrommotor nach einem der vorhergehenden Ansprüche, dadurch gekennzeichnet, daß während der Schrittmotor-Beschleunigungsphase mittels des Mikroprozessors die Periode des Stellungsgebersignals mit einem vorbestimmten Grenzwert vergleichbar ist.

7. Mehrphasen-Gleichstrommotor nach einem der vorhergehenden Ansprüche, gekennzeichnet durch eine logische Entscheidungsstufe, mittels deren bei Erreichen einer vorbestimmten Drehzahl auf einen Beschleunigungsbetrieb umschaltbar ist, bei dem für jede Motorumdrehung die Periode des Stellungsgebersignals gemessen und für die je Umdrehung vorgesehene Pulszahl für die betreffenden nächsten Phasen ein Zeittakt gesetzt wird, der um einen vorbestimmten Wert kleiner als der Quotient aus der Stellungsgeber-signalperiode für die jeweils vorausgegangene Motorumdrehung und der Pulszahl je Umdrehung ist.

8. Mehrphasen-Gleichstrommotor nach einem der vorhergehenden Ansprüche, gekennzeichnet durch eine logische Entscheidungsstufe, die in der Beschleunigungsphase des Motors nach jeder Umdrehung ermittelt, ob der Motor während der vorausgegangenen Umdrehung beschleunigt hat, und eine weitere Taktverkürzung der Kommutierungssignale nur zuläßt, wenn eine Beschleunigung ermittelt wurde.

9. Mehrphasen-Gleichstrommotor nach einem der vorhergehenden Ansprüche, dadurch gekennzeichnet, daß zur Drehzahlregelung mittels des Mikroprozessors anhand der Periode des Stellungsgebersignals die Zeit pro Umdrehung gemessen und mit einer der Solldrehzahl entsprechenden Zeit verglichen wird, sowie daß mittels des Mikroprozessors anhand eines vorbestimmten Regelalgorithmus die Dauer der der Endstufe zugehenden Steuerpulse als Funktion der so ermittelten Drehzahlabweichung eingestellt wird.

10. Mehrphasen-Gleichstrommotor nach einem der Ansprüche 1 bis 8, dadurch gekennzeichnet, daß zur Drehzahlregelung mittels des Mikroprozessors anhand der Periode des Stellungsgebersignals die Zeit pro Umdrehung gemessen und mit einer der Solldrehzahl entsprechenden Zeit verglichen wird, daß ein Steuerpulsgenerator zum Erzeugen von Endstufen-Steuerpulsen mit einer im Vergleich zur Kommutierungsfrequenz hohen Folgefrequenz
vorgesehen ist, und daß mittels des Mikroprozessors
anhand eines vorbestimmten Regelalgorithmus das
Tastverhältnis der Endstufen-Steuerpulse als Funktion
der ermittelten Drehzahlabweichung einstellbar ist.

11. Mehrphasen-Gleichstrommotor nach einem der vorhergehenden Ansprüche, dadurch gekennzeichnet, daß die Endstufe (EV) aus vom Mikroprozessor (MP) unmittelbar gesteuerten Darlington-Transistorstufen aufgebaut ist.

12. Mehrphasen-Gleichstrommotor nach einem der Ansprüche
1 bis 10, dadurch gekennzeichnet, daß die Endstufe
(EV) mit einer Überwachungsanordnung zum Begrenzen
des Motorstromes versehen ist.

0142837

Fig. 1

Fig. 2